# EUROPEAN PATENT SPECIFICATION

(11) **EP 3 329 786 B1**
(45) Date of publication and mention of the grant of the patent: **02.12.2026**
(21) Application number: 16832769.0
(22) Date of filing: 20.07.2016
(51) Int. Cl.: A23L 2/00, A23L 2/40, C12C 5/02, C12G 3/00, C08B 37/00

(54) **METHOD FOR PRODUCING A POLYSACCHARIDE-PROTEIN COMPLEX**
VERFAHREN ZUR HERSTELLUNG EINES POLYSACCHARID-PROTEIN-KOMPLEXES
PROCÉDÉ DE FABRICATION D'UN COMPLEXE POLYSACCHARIDE-PROTÉINE

(30) Priority: 31.07.2015 JP 2015151666
(43) Date of publication of application: 06.06.2018
(73) Proprietor: Fuji Oil Co., Ltd., Izumisano-shi, Osaka 598-8540 (JP)
(72) Inventor: ASAI, Yuji, Tsukubamirai-shi Ibaraki 300-2436 (JP); HATTORI, Mitsuo, Tsukubamirai-shi Ibaraki 300-2436 (JP)
(74) Representative: Boult Wade Tennant LLP
(86) International application number: PCT/JP2016/071305
(87) International publication number: WO 2017/022490

(56) References cited:
- EP-A1- 1 731 043
- EP-A1- 2 025 235
- WO-A1-2006/036059
- WO-A1-2012/169227
- JP-A- 2014 124 119
- JP-A- 2014 124 119
- US-A1- 2009 196 973
- US-A1- 2014 134 310
- US-B1- 7 160 563
- C.L. MOTT ET AL: "Effect of Xanthan Gum on Enhancing the Foaming Properties of Whey Protein Isolate", JOURNAL OF AMERICAN OIL CHEMISTS SOCIETY JAOCS, vol. 76, no. 11, 1 November 1999 (1999-11-01), pages 1383 - 1386, XP055543322
- SADAHIRA MITIE S ET AL: "Influence of protein-pectin electrostatic interaction on the foam stability mecha", CARBOHYDRATE POLYMERS, vol. 103, 16 December 2013 (2013-12-16), pages 55 - 61, XP028613116, ISSN: 0144-8617, DOI: 10.1016/J.CARBPOL.2013.11.070
- DATABASE WPI Week 201448, Derwent World Patents Index; AN 2014-M93265
- MOTT C. L. ET AL.: "Effect of Xanthan Gum on Enhancing the Foaming Properties of Whey Protein Isolate", JOURNAL OF AMERICAN OIL CHEMISTS' SOCIETY, vol. 76, no. 11, 1999, pages 1383 - 1386, XP000774229
- SHOMER ILAN: "Protein Coagulation Cloud in Citrus Fruit Extract. 1. Formation of Coagulates and Their Bound Pectin and Neutral Sugars", J. AGRIC. FOOD CHEM., vol. 39, 1991, pages 2263 - 2266, XP055362873
- SHOMER ILAN ET AL.: "Involvement of Proteins in Cloud Instability of Valencia Orange [Citrus sinensis(L.) Osbeck] Juice", J. AGRIC. FOOD CHEM., vol. 47, 1999, pages 2632 - 2637, XP055362874
- WANG ZHENGSHAN ET AL.: "Foaming Properties of Whey Protein Isolate and lambda-Carrageenan Mixed Systems", JOURNAL OF FOOD SCIENCE, vol. 80, no. 8, June 2015 (2015-06-01), pages N1893 - N1902, XP055362877
- WIERENGA PETER ET AL.: "Reconsidering the importance of interfacial properties in foam stability", COLLOIDS AND SURFACES A: PHYSICOCHEM. ENG. ASPECTS, vol. 344, 2009, pages 72 - 78, XP026184598
- HASHEMI MARJAN MOHAMMMADI ET AL.: "Preparation of and studies on the functional properties and bactericidal activity of the lysozyme-xanthan gum conjugate", FOOD SCIENCE AND TECHNOLOGY, vol. 57, 2014, pages 594 - 602, XP028838357
- MITSUO ASAHARA ET AL.: "Suisan Kako Gijutsu Kaihatsu Kenkyu (2) Maiwashi Nakabone Chushutsu Ekisu no Happosei", HEISEI 12 NENDO YAMAGUCHI- KEN SUISAN KENKYU CENTER JIGYO HOKOKU, 2002, pages 119 - 120, XP009508942
- LOVEDAY SIMON M. ET AL.: "Tuning heat-induced colloidal aggregation of whey proteins, sodium caseinate and gum arabic: Effect of protein composition, preheating and gum arabic level", FOOD RESEARCH INTERNATIONAL, vol. 62, 2014, pages 128 - 136, XP028863509
- DICKINSON ERIC: "Colloids in Food: Ingredients, Structure, and Stability", ANNU. REV. FOOD SCI. TECHNOL., vol. 6, pages 211 - 233, XP022266046

## Description

### Technical Field

The present invention relates to a method for producing a polysaccharide-protein complex.

### Background Art

Some food products may be provided with particularly high extra value by foaming. Representative examples of such a food product include effervescent beverage, such as beer.

Presently, beer and low-malt beer have been consumed in a large volume in Japan as alcoholic beverages produced by using malt. Low-malt beer is smaller in the amount of malt used as compared to beer, under the Japanese Liquor Tax Law, products with an amount of malt used accounting for 66.7% by weight or more of all raw materials except water are classified as beer, and products with an amount of malt used accounting for less than 66.7% by weight are classified as low-malt beer. In recent years, beverages called "third beer" or "New Genre" following "beer" or "low-malt beer" have been placed in the market and have widely been spread especially to low price-oriented consumers. The "third beer" includes one produced without using malt as a raw material and one which has an amount of malt used being smaller as compared to beer and produced by mixing beer or low-malt beer with another alcoholic beverage. In the Japanese Liquor Tax Law, the former is categorized as "other brewage (effervescent) (1)" or "other miscellaneous liquor (2)", and the latter is categorized as "liqueur (effervescent) (1)."

### Prior Art Documents

### Patent Document

Patent Document 1: WO 04/000990 A
Patent Document 2: WO 05/005593 A
Patent Document 3: JP 2006-204172 A
Patent Document 4: JP 2011-188833 A
Patent Document 5: JP S61-92554 A
Patent Document 6: JP H5-38275 A
Patent Document 7: JP 2013-21944 A
Patent Document 8: JP 2014-124119 A

### Summary of Invention

### Problems to Be Solved by Invention

Foam of beer has important roles, such as exhibiting visual beauty, inhibiting carbon dioxide gas from escaping away, preventing beer from degrading upon coming into contact with air and keeping palatability, and releasing an aroma through foaming. For this reason, it is an important element for producing beer with a good quality to improve foam retention. This is applied not only for beer but also for beer-like beverages such as low-malt beer and the third beer, which are beverages substituting for beer. However, such beer-like beverages with a reduced amount of malt used are problematic in that they are inferior in foam retention to beer. This is because protein and carbohydrate derived from malt contribute to the foam retention of beer.

Due to the change of the social situation and the diversification of the life style, non-alcoholic beer-taste beverages have spread in recent years and the market thereof is also expanding rapidly. Generally, the non-alcoholic beer-taste beverage means a beverage containing up to 1% of an alcohol component, and this is categorized as "soft drink" on the food classification of Japan. There are several methods for producing a non-alcoholic beer-taste beverage, for example, a method including once producing beer and then removing an alcohol component; a method including preparing a wort by saccharizing malt and subsequently adding hop and boiling, removing impurities without adding a yeast fungus, and then adding carbonic acid and other components; a method including adding various components to a malt extract extracted from malt without using a wort; and a method including adding a beer-like taste to a soft beverage, thereby expressing beer flavor. Examples of main raw materials for non-alcoholic beer-taste beverage to be used include malt, saccharide, hop, and malt extract. However, the problem concerning foam retention still remains with non-alcoholic beer-taste beverage because the amount of malt used is smaller than beer as in the cases of low-malt beer and the third beer.

Further, foam retention by protein cannot be expected for carbonated soft beverage prepared by adding carbonic acid into beverage, such as soda pop, cola, and carbonated juice. The conventional carbonated soft beverage expresses a cooling sensation by the foam, but they are not necessarily favorable in the sense of palate, for example, the foam is coarse; a poor foam retention is exhibited; and a stimulus by carbonic acid is too strong. For this reasons, a technology capable of generating fine foam and improving foam retention has also been demanded for the carbonated soft beverage.

As means for solving the problem regarding the foam retention of malt alcoholic beverages and effervescent alcoholic beverages produced without using malt: a method including adding a foam retention improver containing saponin and thickener to a low-malt beer (Patent Document 1); a method including adding pea protein extracted from pea as a foam retention improving substance to an effervescent alcoholic beverage (Patent Document 2); and a method including adding decomposed sorghum to an effervescent beverage (Patent Document 3) have been proposed. However, all of them provide coarse foam and are insufficient in foam retaining effect. Moreover, a method including adding a polypeptide prepared by enzymatically decomposing a protein (Patent Document 4) has been proposed as a method for improving the foaming of a beverage. However, this method renders the enzymatic decomposition product broad in molecular weight distribution and the product contains a large amount of a contaminating fraction that does not contribute to foam quality improvement or foam retention, and the method will require adding a large amount of polypeptide for acquiring a sufficient effect. Thus, it remains as a problem that the foaming material itself impairs the flavor of beverages and the applications thereof are greatly limited. Moreover, the polypeptide obtained via enzymatic decomposition is excellent in foaming ability, but its function to maintain the foam generated is not sufficient, and thus a problem still remains.

As methods for solving the problem of foam retention of carbonated soft beverages free of alcohol: a method of producing a highly effervescent soft beverage with a composition containing a saponin component and carbonic acid gas in the raw material liquid (Patent Document 5); and a method for producing an effervescent preference beverage improved in foaming and foam retention, characterized by preparing a preference beverage in which saponin and oligosaccharide are mixed and then including carbonic acid gas in the preference beverage (Patent Document 6), have been proposed. However, a bitter taste due to the saponin component is a problem with these technologies.

Moreover, a method of using a soybean dietary fiber for generating and retaining fine foam in an unfermented beer-taste beverage to improve foam retention and mouthfeel (Patent Document 7) has been proposed. In this technology, however, that the amount of addition for imparting a sufficient foam retaining effect is large and that the flavor peculiar to soybean thus damages the flavor of a beverage itself, greatly limiting the applications remain as problems.

A method of using a water-soluble pea polysaccharide (Patent Document 8) has been proposed as means for solving the problem concerning flavor in the utilization of a soybean dietary fiber. However, pea polysaccharides produced using conventional technologies do not exhibit a foam retaining function sufficiently and there still leaves room for improvement.

US 2014/134310 relates to a pectic polysaccharide, wherein a degree of methyl esterification of constituent galacturonic acid is 45% or less, a structure of a single molecule observed with an atomic force microscope comprises a star structure, and a diameter of the molecule is more than 100 nm and equal to or less than 200 nm.

EP 1 731 043 relates to pectin conjugates.

WO 2012/084624 relates to compositions of fat-soluble active ingredients containing plant protein-soy polysaccharide complexes.

An object of the present invention is to provide a material which enables to generate and retain fine foam without adversely affecting a flavor of an effervescent beverage by adding to the beverage, and a method for producing the material. Moreover, another object of the present invention is to provide a method for stabilizing foam of an effervescent beverage using the material, and a method for producing an effervescent beverage.

### Means for Solving Problems

The present invention encompasses a method for producing a polysaccharide-protein complex according to claim 1.
In some embodiments, a ratio of the polysaccharide to the protein in the polysaccharide-protein complex is from 10:1 to 1:100 on mass basis.
In some embodiments, the polysaccharide is derived from pea seed.
In some embodiments, a pH in the heating is 2.5 to 3.5.
The present invention also provides a method for stabilizing foam of an effervescent beverage according to claim 6.
The present invention also provides a method for producing an effervescent beverage according to claim 7.
In some embodiments, the effervescent beverage includes an alcohol.
Described herein but not claimed is a polysaccharide-protein complex, including a protein and a polysaccharide containing uronic acid as a constituent saccharide, and having a 30% by mass or less of a fraction having 12000 or more of molecular weight and 30% by mass or more of a fraction having 500 or more and less than 12000 of molecular weight, where the complex is heated;
A ratio of the polysaccharide to the protein in the polysaccharide-protein complex may be from 10:1 to 1:100 on mass basis.
The polysaccharide may be
derived from pea seed.
The present invention also provides a foam stabilizer according to claim 9.
The present invention also provides an effervescent beverage according to claim 11.
In some embodiments, the effervescent beverage includes an alcohol.

### Effect of Invention

A method for producing a polysaccharide-protein complex of the present invention enables to obtain a material capable of generating and retaining fine foam without exerting any adverse effect on a flavor of an effervescent beverage by adding the material to the beverage.

### Mode for Carrying Out Invention

Hereinafter, embodiments of the present invention will be described in detail. However, the present invention is not limited to the following embodiments.

A polysaccharide-protein complex of the embodiment (hereinafter simply referred to as "complex" depending on a situation) is a material having been heated and includes a protein and a polysaccharide containing uronic acid as a constituent saccharide. The above, "having been heated" means being subjected to heating treatment and includes a case that the material was thereafter cooled.

The polysaccharide is soluble in water. The polysaccharide is a plant-derived polysaccharide extracted from a plant raw material. For example, the content of the uronic acid in the polysaccharide may be 0.01 to 50% by mass. The uronic acid include D-glucuronic and D-galacturonic acid.

A water-soluble pea polysaccharide derived from pea seed or a water-soluble soybean polysaccharide derived from soybean, both described in detail below, is used as a plant-derived polysaccharide in the methods and product of the present invention. These polysaccharides are known to contain uronic acid as a constituent saccharide. Described herein but not claimed, the source of the plant-derived polysaccharide containing uronic acid as a constituent saccharide may be pectin, tragacanth gum, gum arabic,
guttae gum, karaya gum, psyllium seed gum, agar, and an alginic acid, and other plant-derived polysaccharides. Examples of the origin of the pectin include citrus fruit, potato, and beet. An alginic acid means alginic acid itself or a derivative thereof. Examples the source of the microorganism-derived polysaccharide containing uronic acid as a constituent saccharide include xanthan gum, and gellan gum.

The above polysaccharide or polysaccharide source may be used alone or in combination of two or more. As the polysaccharide containing uronic acid as a constituent saccharide, a water-soluble pea polysaccharide or a water-soluble soybean polysaccharide is used, and it is more preferred to use a water-soluble pea polysaccharide. For forming a complex of polysaccharide and protein described below, a polysaccharide isolated or extracted beforehand may be used and a polysaccharide source containing components other than the polysaccharide may also be used. The heating treatment for forming the complex and the heating extraction of the polysaccharide from the polysaccharide source may be performed at the same time.

The water-soluble pea polysaccharide is a water-soluble polysaccharide obtained by extracting from pea seed. The water-soluble pea polysaccharide also may be obtained by extracting from a pea seed treated material such as fiber fraction obtained by removing protein fraction, and starch fraction contained in a pea seed.

For the extraction of the water-soluble pea polysaccharide from pea seed, water may be used as a solvent. The water may be hot water. A pH used during the extraction is preferably 3 to 12. It is because that 3 or more of pH may suppress a hydrolysis of the polysaccharide, and that 12 or less of pH may suppress an elimination decomposition of the polysaccharide. The pH used during the extraction is more preferably 4 to 10.

The water-soluble pea polysaccharide may be obtained by, for example, adding water to pea seed or a processed product thereof as a raw material in an amount of 5 to 20 times the amount of the raw material, adjusting pH to 3 to 12, and then extracting at a temperature of 60°C or more and 180°C or less, preferably 60°C or more and 150°C or less, or 80°C or more and 180°C or less, more preferably 80°C or more and 150°C or less, and even more preferably 80°C or more and 130°C or less. Higher extraction temperature is preferable because the extraction efficiency will be more improved, and if the extraction temperature is 180°C or lower, the hydrolysis of the polysaccharide may be suppressed. The extraction time may be adjusted arbitrarily, for example, depending on the condition and temperature of the raw material, more specifically, may be set at 0.5 to 3 hours.

The extracted liquid obtained may be used as a water-soluble pea polysaccharide source after separating insoluble fibrous components in the liquid with, for example, a centrifugal separator. In addition, it may also be used as a water-soluble pea polysaccharide source after subjecting to, for example, purification treatment such as removal of protein, removal of starch, removal of salt, and removal of dye components; and/or sterilization treatment such as high temperature sterilization, retort sterilization, electromagnetic sterilization, high temperature vacuum sterilization, ozone sterilization, electrolyzed water sterilization, and indirect heating sterilization. The removal of starch may be performed by, for example, decomposition by amylase. The water-soluble pea polysaccharide source may be used still in a liquid form, or alternatively may be used after drying by, for example, freeze drying, or spray drying.

The water-soluble soybean polysaccharide is a water-soluble polysaccharide obtained by extracting from soybean. The water-soluble soybean polysaccharide is preferably derived from soybean cotyledon. As a raw material for extracting the polysaccharide, bean curd refuse (okara), which is by-product of bean curd (tofu) or soybean protein isolate, may be used. The bean curd refuse is preferably produced from defatted soybean, or is preferably by-produced during a process of producing soybean protein isolate.

The water-soluble soybean polysaccharide may be extracted, for example, at a temperature of 60°C or more and 180°C or less, preferably 60°C or more and 150°C or less, more preferably 80°C or more and 130°C or less, and even more preferably 100°C or more and 130°C or less, after adding, to a raw material such as soybean pulp, water in an amount of 5 to 20 times the amount of the raw material, and subsequently adjusting the pH at 3 to 7. The extraction temperature within the range described above enables to improve the extraction efficiency and suppress the hydrolysis of the water-soluble soybean polysaccharide. Extraction time, separation, purification treatment, sterilization treatment, and drying of the insoluble fibrous components of the extracted liquid obtained may be performed under the same conditions as in the case of the extraction of water-soluble pea polysaccharide.

The type of protein used for the production of polysaccharide-protein complex of the embodiment, is soybean protein, or pea protein. These proteins may be used alone or in combination of two or more. The protein is soybean protein, or pea protein because they may enhance the effect of the foam stability of effervescent beverage.

The polysaccharide-protein complex of the embodiment is obtained by subjecting a polysaccharide to heat treatment in the presence of a protein, thereby forming the complex of polysaccharide and protein. The forming of complex may be practiced by simultaneously performing a step of heat extraction of the polysaccharide from a polysaccharide source and a heating step for forming the complex of polysaccharide and protein, in other words, by performing the extraction of polysaccharide from the polysaccharide source in the presence of the protein to be complexed, or alternatively may be practiced by mixing a polysaccharide having been extracted from a raw material with a protein, and then performing heating treatment.

The forming complex is preferably performed in the presence of water, and more preferably performed in an aqueous solution. The concentration of the polysaccharide in the aqueous solution at the time of heating is preferably 0.1 to 10% by mass, and is preferably 1 to 5% by mass. In addition, the concentration of the protein in the aqueous solution at the time of heating is preferably 0.1 to 10% by mass, and preferably 1 to 5% by mass.

For example, the forming the complex of polysaccharide and protein may be performed specifically by the following method. The polysaccharide and the protein are suspended in an aqueous system and the resulting suspension is adjusted to pH 2 to 5, preferably pH 2.5 to 3.5. Any acid, which is used in the food industry, may be used for adjusting pH without any limitation. Examples of the acid include hydrochloric acid, phosphoric acid, sulfuric acid, lactic acid, citric acid, acetic acid, and oxalic acid. After the pH adjustment, heating treatment is performed at a temperature of 100 to 160°C, and preferably 110 to 140°C. When the heating temperature is 80°C or more, a complex reaction may be performed efficiently in a shorter time. When the heating temperature is 180°C or less, excessive decomposition of the polysaccharide and the protein during the complex reaction may be suppressed. The heating time is approximately 1 to 180 minutes and may be adjusted arbitrarily depending on, for example, the condition, and temperature of the raw material.

After the heating treatment, solid component in the suspension may be separated and removed by an ordinary method, such as filtration and centrifugal separation. The foam stabilizing effect of a beverage is maintained even if the solid component is not separated. However, separating and removing solid component prevents a generation of precipitation and maintains better appearance of the beverage, and thus it is preferable. The starch in the suspension may be decomposed or removed in order to prevent the generation of a precipitation. The decomposition of the starch may be performed using amylase. The removal of the starch may be performed by, for example, removing a precipitation formed through aggregation induced by cooling or addition of an emulsifier.

If necessary, purification treatment, such as neutralization-desalting and removal of hydrophobic substances or low molecular weight substances, may be performed to the resultant liquid containing the polysaccharide-protein complex. Examples of the purification treatment include activated carbon treatment, resin adsorption treatment, reprecipitation method performed using a polar solvent such as methanol, ethanol, isopropanol, and acetone, ultrafiltration method, reverse osmosis method, gel filtration method, dialysis method, ion exchange resin method, electronic dialysis method, and ion exchange membrane method. These methods may be used alone or in combination of two or more. Especially, use of reprecipitation method using a polar solvent, ultrafiltration method, reverse osmosis method, gel filtration method, or dialysis method is preferable because various low molecular weight molecules may also be removed. When a desalting purification treatment is performed, it is preferable to perform the treatment in such a manner that the ash content in the liquid resulting from the treatment will be 10% by mass or less.

The resultant liquid containing the polysaccharide-protein complex may be used as received for the production of an effervescent beverage, or alternatively a product obtained by drying the liquid by an ordinary method may be used.

The ratio of the polysaccharide to the protein in the polysaccharide-protein complex is preferably from 10:1 to 1:100 on mass basis. The ratio within the above range enables to enhance the effect of generating and retaining fine foam. The ratio of the polysaccharide to the protein is more preferably from 5:1 to 1:10, and even more preferably 3:1 to 1:4 on mass basis. Moreover, when an unextracted raw material is used directly as a polysaccharide source for forming a complex, the amount of the polysaccharide source and the amount of the protein may be adjusted so that the ratio of the polysaccharide to the protein in the obtained complex falls within the above range.

Size of the polysaccharide-protein complex of the embodiment is important for providing high foam stability. Specifically, a content of a fraction being 12000 or more in molecular weight in the complex is 30% by mass or less and a content of a fraction being 500 or more and less than 12000 in molecular weight is 30% by mass or more, and more preferably, the content of the fraction being 12000 or more in molecular weight is 25% by mass or less and the content of the fraction being 500 or more and less than 12000 in molecular weight is 40% by mass or more.

The content of the fraction being 500 or more and less than 12000 in molecular weight in the complex may be 100% by mass, or alternatively may be 80% by mass or less, 60% by mass or less, or 50% by mass or less. The content of the fraction being 12000 or more in molecular weight in the complex may be 0% by mass, or alternatively may be 5% by mass or more, 10% by mass or more, 15% by mass or more, or 20% by mass or more. The content of the fraction being less than 500 in molecular weight in the complex is 0% by mass or more and less than 70% by mass, preferably 0% by mass or more and less than 60% by mass, and more preferably 0% by mass or more and less than 40% by mass. The content of the fraction being less than 500 in molecular weight may be 20% by mass or more and less than 40% by mass or alternatively may be 30% by mass or more and less than 40% by mass.

A molecular weight distribution of complex may be measured using a gel filtration HPLC method. More specifically, for example, the complex is dissolved in 20 mM phosphate buffer solution to form an aqueous solution, followed by filtration through 0.2 µm filter, and then the resulting sample is passed through a gel filtration chromatography column and is eluted using the above-mentioned phosphoric acid buffer solution, and then the absorbance at 214 nm is measured to determine the elution time of the complex. A molecular weight calibration curve is established using, for example, cytochrome C (molecular weight: 12384), aprotinin (molecular weight: 6512), gastrin I (molecular weight: 2098), angiotensin II (molecular weight: 1046), and triglutamic acid (molecular weight: 405) as molecule markers, and then the molecular weight distribution of the complex may be determined on the basis of the calibration curve.

The present invention also provides a foam stabilizer containing a polysaccharide-protein complex as an active component. The foam stabilizer may be composed of only the polysaccharide-protein complex or alternatively may contain an emulsifier such as monoglyceride and other various substances having a foam stabilizing effect. A content of the polysaccharide-protein complex in the foam stabilizer may be 10 to 100% by mass, preferably 50 to 98% by mass, and more preferably 90 to 95% by mass.

Moreover, foam of an effervescent beverage may be stabilized by adding the polysaccharide-protein complex of the embodiment to the effervescent beverage raw material. More specifically, by adding the polysaccharide-protein complex of the embodiment to an effervescent beverage raw material, a large amount of fine foam may be generated more easily in a resulting effervescent beverage and the foam generated may be retained for a longer time.

Effervescent beverages described herein include:
(1) malt alcoholic beverage, such as beer, low-malt beer, and mixture of beer or low-malt beer with other alcoholic beverage;
(2) effervescent non-alcoholic beverage containing a malt component, such as non-alcoholic beer;
(3) effervescent alcoholic beverage produced without using malt, such as beer-like beverage produced without using malt, which are classified as "other brewages (effervescent) (1)" in the Japanese Liquor Tax Law, and liqueur such as Shochu High Ball, which is commonly called "CHU-HI"; and
(4) carbonated soft beverage free of protein that contributes to foam stability, such as soda pop, lemonade, supplement beverage, and non-alcoholic cocktail.

It is noted that even a beverage which is usually ineffervescent, such as green tea, black tea, coffee, liqueur, wine, Shochu, spirits and whiskey, is included in the effervescent beverage when it has been carbonated and thereby has been provided with foaming ability. Moreover, it is also noted that a powdered carbonated beverage such as soda pop and cream soda which are reconstituted in water or hot water before drinking is also included in the effervescent beverage.

The content of the polysaccharide-protein complex or the foam stabilizer of the embodiment in a beverage may be adjusted, for example, to 0.001 to 5% by mass, preferably 0.01 to 2% by mass, in terms of a polysaccharide-protein complex. When it is adjusted to 0.001% by mass or more, more enhanced foam stabilizing effect may be obtained. The polysaccharide-protein complex or foam stabilizer of the embodiment may provide an enhanced foam stabilizing effect even with a small addition amount. When an effervescent beverage is processed into a powdery beverage, the content of the complex contained in the powdery beverage may be adjusted such that the content of the complex falls within the above range in a state where the powdery beverage has been dissolved in a concentration suitable for drinking.

A method for producing the effervescent beverage of the embodiment includes a step of adding the polysaccharide-protein complex or foam stabilizer of the embodiment to an effervescent beverage raw material, and may include a conventionally known method without any particular limitations. In addition, there are no particular limitations with the method and the timing of the addition. Also for an effervescent alcoholic beverage produced without using malt or a malt alcoholic beverage, the polysaccharide-protein complex or foam stabilizer of the embodiment may be added at an arbitrary stage of a conventionally known production process.

An effervescent alcoholic beverage produced without using malt is produced by preparing a pre-fermentation liquid including a carbon source, a nitrogen source, hop, and water and then fermenting the pre-fermentation liquid with yeast. For example, a foam stability of the beverage may be improved by using the complex or foam stabilizer of the embodiment as a part of the raw material. A general process for producing a malt alcoholic beverage includes a charging step of stirring and mixing a raw material containing malt with water for the preparation, followed by heating to perform saccharification and take a wort, a fermentation step of adding yeast to perform fermentation, a storage step of storing the fermentation-completed liquid, and a filtering-filling step of filtering the storage-completed liquid and filling a container therewith. The complex or foam stabilizer of the embodiment may be added at any state during this production process.

### EXAMPLES

Hereafter, embodiments of the present invention will be explained concretely with reference to examples. Part(s) and % referred to in the examples mean mass basis unless stated otherwise.

After dehulling 50 kg of pea seeds, 5-fold amount of water was added to the cotyledon part, and then the seeds were immersed for 24 hours. The cotyledon part was ground with a Homomixer (5,000 rpm, for 30 minutes), and then protein and starch were extracted with pH 9 maintained using 30% sodium hydroxide solution. The components such as protein, and starch dispersed in water were removed by using a centrifugal filter (1,000 rpm, for 5 minutes), and a fiber was recovered. Moreover, 5-fold amount of water was added to the fiber and was stirred by using a Homomixer (3,000 rpm, for 30 minutes), and then the fiber was recovered by using a centrifugal filter (1,000 rpm, for 5 minutes). This operation was repeated twice and the fiber obtained was freeze dried to obtain 10 kg of a pea seed treated material was obtained.

### <Comparative Example 1>

Into 940 parts of water, 60 parts of the above-described pea seed treated material was dispersed, then the mixture was adjusted to pH 6 using hydrochloric acid, and then heated at 120°C for 90 minutes to extract a polysaccharide. An insoluble fiber in the liquid was removed by centrifugal separation (5,000 rpm, for 30 minutes) and the supernatant was recovered. The supernatant was heated to 60°C, and then an amylase (Fungamyl 800L; produced by Novozymes A/S) with an amount corresponding to 0.1% by mass of the solid content was added at pH 6 and a starch was decomposed for 1 hour. The amylase was then deactivated by heating in boiling water for 15 minutes, and then the mixture was freeze dried to obtain powdery water-soluble pea polysaccharide A.

### <Comparative Example 2>

Into 940 parts of water, 60 parts of the above-described pea seed treated material was dispersed, then the mixture was adjusted to pH 3 using hydrochloric acid, and then heated at 120°C for 90 minutes to extract a polysaccharide. An insoluble fiber in the liquid was removed by centrifugal separation (5,000 rpm, for 30 minutes) and the supernatant was recovered. The supernatant was adjusted to pH 6 with an alkali, and then an amylase (Fungamyl 800L; produced by Novozymes A/S) with an amount corresponding to 0.1% by mass of the solid content was added at 60°C, and the starch was decomposed for 1 hour. The amylase was then deactivated by heating in boiling water for 15 minutes, and then the mixture was freeze dried to obtain powdery water-soluble pea polysaccharide B.

### <Example 1>

Into 940 parts of water, 40 parts of the above-described pea seed treated material (40 parts) and 20 parts of soybean protein (FUJIPRO-R; produced by Fuji Oil Co., Ltd.) were dispersed, then the mixture was adjusted to pH 3 using hydrochloric acid, and then heated at 120°C for 90 minutes to extract a polysaccharide and form a complex of the polysaccharide and the protein. An insoluble fiber in the liquid was removed by centrifugal separation (5,000 rpm, for 30 minutes) and the supernatant was recovered. The supernatant was adjusted to pH 6 with an aqueous sodium hydroxide solution, and then amylase (Fungamyl 800L; produced by Novozymes A/S) with an amount corresponding to 0.1% by mass of the solid content was added at 60°C, and the starch was decomposed for 1 hour. The amylase was then deactivated by heating the resulting solution in boiling water for 15 minutes, and then the mixture was freeze dried to obtain powdery polysaccharide-protein complex A.

### <Examples 2 to 5>

Polysaccharide-protein complexes B, C, D and E were obtained in the same manner as Example 1 except that potassium caseinate (Tatua 500: produced by Tatua Cooperative Dairy Co., Ltd.), wheat protein (produced by Hokkoku Food Co., Ltd.), pea protein (NUTRALYS F85M: produced by Rocket Japan), or dried albumen (Meringue Powder: produced by Taisei Co., Ltd.) was used instead of the soybean protein.

### <Example 6>

Into weter, 30 parts of the water-soluble pea polysaccharide prepared in Comparative Example 1 and 30 parts of soybean protein (FUJIPRO-R; produced by Fuji Oil Co., Ltd.) were dissolved or dispersed, then the mixture was adjusted to pH 3 using hydrochloric acid, and then heated at 120°C for 60 minutes to form a complex of the polysaccharide and the protein. The insoluble matter generated was removed by centrifugal separation (5,000 rpm, for 30 minutes) and the supernatant was recovered. The supernatant was adjusted to pH 4.5 with an alkali, and then freeze dried to obtain powdery polysaccharide-protein complex F.

### <Comparative Example 3>

Into water, 30 parts of the water-soluble pea polysaccharide prepared in Comparative Example 1 and 30 parts of a soybean protein (FUJIPRO-R; produced by Fuji Oil Co., Ltd.) were dissolved or dispersed, then the mixture was adjusted to pH 3 using hydrochloric acid, then the insoluble matter was removed by centrifugal separation (5,000 rpm, for 30 minutes) without heating, and then the supernatant was recovered. The supernatant was adjusted to pH 4.5 with an alkali, and then freeze dried to obtain powdery composition A containing polysaccharide and protein.

### <Comparative Example 4>

Into 540 parts of water, 30 parts of soybean protein (FUJIPRO R: produced by Fuji Oil Co., Ltd.) was suspended, then the mixture was adjusted to pH 7, and then protease (protease A "Amano" SD: produced by Amano Enzyme, Inc.) with an amount of 0.4% relative to the protein was added to the mixture to react at 40°C for 60 minutes. The insoluble matter generated was removed by centrifugal separation (5,000 rpm, for 30 minutes) and the supernatant was recovered and boiled at 100°C for 15 minutes to deactivate the enzyme, and then freeze dried to obtain an enzymatically decomposed protein. The enzymatically decomposed protein and the water-soluble pea polysaccharide B prepared in Comparative Example 2 were mixed together in a powdery form in a ratio of 1:2 to obtain composition B containing polysaccharide and protein.

### <Comparative Examples 5 and 6>

Compositions C and D each containing polysaccharide and protein were obtained in the same manner as Comparative Example 4 except that the protease used was changed to THERMOASE PC10F (produced by Amano Enzyme Inc.) or Papain W-40 (produced by Amano Enzyme Inc.).

### <Experiment Example 1>

For the complexes A to F and the compositions A to D, the molecular weight was determined using a gel filtration HPLC method. An aqueous solution of complex or composition prepared using 20 mM phosphate buffer solution (pH 7.2) was filtered using a 0.2 µm filter. The resulting filtrate was loaded to Superdex peptide 7.5/300GL (produced by GE Healthcare) and was eluted at a rate of 0.5 ml/minute using the above-mentioned phosphate buffer solution. The detection of each complex or composition was performed by measuring an absorbance at 214 nm. A calibration curve was produced using cytochrome c (molecular weight: 12384), aprotinin (molecular weight: 6512), gastrin I (molecular weight: 2098), angiotensin II (molecular weight: 1046), and triglutamic acid (molecular weight: 405) as molecular weight markers, and the distribution of molecular weight was determined on the basis of the calibration curve. Results are shown in Table 1.

**[Table 1]**

| Ratio of each fraction present | | | | | | |
|---|---|---|---|---|---|---|
| | | Type of protein | Protease | 12000 or more in molecular weight (% by mass) | 500 or more and less than 12000 in molecular weight (% by mass) | Less than 500 in molecular weight (% by mass) |
| Example 1 | Complex A | Soybean | - | 22.1 | 43.0 | 34.9 |
| Example 2 (Reference) | Complex B | Casein | - | 24.2 | 45.7 | 30.1 |
| Example 3 (Reference) | Complex C | Wheat | - | 25.3 | 36.0 | 38.7 |
| Example 4 | Complex D | Pea | - | 22.8 | 43.5 | 33.7 |
| Example 5 (Reference) | Complex E | Albumen | - | 25.0 | 40.5 | 34.5 |
| Example 6 | Complex F | Soybean | - | 20.5 | 41.2 | 38.3 |
| Comparative Example 3 | Composition A | Soybean | - | 36.3 | 23.0 | 40.8 |
| Comparative Example 4 | Composition B | Soybean | Protease A | 1.6 | 28.2 | 70.2 |
| Comparative Example 5 | Composition C | Soybean | THERMOASE PC-10F | 2.3 | 29.4 | 68.3 |
| Comparative Example 6 | Composition D | Soybean | Papain W-40 | 1.2 | 2.0 | 96.8 |

The complexes A to F contained much fraction being 500 or more and less than 12000 in molecular weight, which is believed to contribute to foam stability. On the other hand, the composition A contained low ratio of fraction being 500 or more and less than 12000 in molecular weight, which contributes to foam stability, but contained high ratio of fraction being 12000 or more in molecular weight because the composition A was unheated and not subjected to decomposition by heating. The compositions B to D formed by enzymatically decomposing the protein by the protease contained excessively increased amounts of fraction being less than 500 in molecular weight.

### <Application Example 1>

For the water-soluble pea polysaccharides A and B, the polysaccharide-protein complexes A to F, and the compositions A and B, the foam stability of an aqueous solution was measured with the method described below. The results are shown in Table 2.

The polysaccharide, complex, or composition was dissolved in water to prepare each 0.2% aqueous solutions. Each of 30ml of the aqueous solutions was put into a 100 ml Nessler color comparison tube with glass stopper. Then the stopper was put on the color comparison tube so as not to allow the solution to leak. And then, the color comparison tube was shaken along the height direction of the tube at a rotation speed of 150 rpm for 1 minute. The color comparison tube was fixed to a tube stand and was left to settle, and the thickness of a foam layer was measured at times of 5 minutes or 60 minutes after the beginning of the settlement. Using the thickness of the foam layer measured after 60 minutes as the index of foam stability: when the thickness is 30 mm or more, this is expressed by ⊙; when the thickness is 20 mm or more and less than 30 mm, this is expressed by ○; when the thickness is 10 mm or more and less than 20 mm, this is expressed by △; and when the thickness is less than 10 mm, this is expressed by ×. When the evaluation is ⊙ or ○, this is rated as acceptable.

**[Table 2]**

| Foam stability of aqueous solution | | | | | |
|---|---|---|---|---|---|
| | | Type of protein | Thickness of foam layer (mm) | | Foam stability |
| | | | After 5 minute settlement | After 60 minute settlement | |
| Comparative Example 1 | Polysaccharide A | - | 16 | 14 | Δ |
| Comparative Example 2 | Polysaccharide B | - | 5 | 3 | × |
| Example 1 | Complex A | Soybean | 49 | 45 | ⊙ |
| Example 2 (Reference) | Complex B | Casein | 54 | 47 | ⊙ |
| Example 3 (Reference) | Complex C | Wheat | 35 | 29 | ○ |
| Example 4 | Complex D | Pea | 51 | 44 | ⊙ |
| Example 5 (Reference) | Complex E | Albumen | 50 | 37 | ⊙ |
| Example 6 | Complex F | Soybean | 46 | 43 | ⊙ |
| Comparative Example 3 | Composition A | Soybean | 14 | 13 | Δ |
| Comparative Example 4 | Composition B | Soybean | 24 | 13 | Δ |

In all of the examples using the complexes A to F, extremely high foam stabilities were exhibited. Especially, the complexes obtained using soybean protein, casein, pea protein, or albumen had excellent foam stabilities. In addition, it was revealed that the complex A obtained using treated pea seeds and protein as starting raw materials and the complex F obtained using an existing water-soluble pea polysaccharide and protein as starting raw materials had almost the same foam stability, and it was found that complexes with superior foam stabilities may be produced in either production method. As observed in the composition A, the foam stability was not improved well in the case of omitting heating as compared to the case of using a polysaccharide independently. It was shown that heating was important in order to obtain a complex with high foam stability.

### <Application Example 2: non-alcoholic carbonated soft beverage>

For the water-soluble pea polysaccharides A and B, the polysaccharide-protein complexes A to F, and the composition A, the foam stability was measured by the method described below assuming a non-alcoholic carbonated soft beverage. The results are shown in Table 3.

Into a 100 ml Nessler color comparison tube, 49 ml of carbonated water was put and 1 ml of 10% aqueous solution of polysaccharide, complex or composition was added, and then they were mixed gently in a manner which avoids foaming. Using an ultrasonic foaming apparatus (Sonic Hour: manufactured by TAKARA TOMY A.R.T.S), an ultrasonic pulse was applied five times from the bottom of the color comparison tube for foaming. The thickness of the foam layer being after 2 minutes from the foaming was measured, and the criteria of foam stability are as follows: when the thickness is 40 mm or more, this is expressed by ⊙; when the thickness is 30 mm or more and less than 40 mm, this is expressed by ○; when the thickness is 20 mm or more and less than 30 mm, this is expressed by △; and when the thickness is less than 20 mm, this is expressed by ×. When the evaluation is ⊙ or ○, this is rated as acceptable.

Organoleptic evaluation was performed for each carbonated beverage, and the foam quality (fineness of foam) and the flavor were evaluated according to the following criteria. The foam quality was evaluated on the basis of visual observation and mouthfeel at tasting, and the flavor was evaluated by tasting.

### (Foam quality)

O: Very fine
△: Moderately fine
×: Coarse
(Flavor)
O: Very good
△: Good
×: Bad

**[Table 3]**

| Foam stability, foam quality and flavor in non-alcoholic carbonated soft beverage | | | | | |
|---|---|---|---|---|---|
| | | Type of protein | Foam stability | Foam quality | Flavor |
| Comparative Example 1 | Polysaccharide A | - | × | Δ | ○ |
| Comparative Example 2 | Polysaccharide B | - | × | × | ○ |
| Example 1 | Complex A | Soybean | ⊙ | ○ | ○ |
| Example 2 (Reference) | Complex B | Casein | ⊙ | ○ | ○ |
| Example 3 (Reference) | Complex C | Wheat | ○ | ○ | ○ |
| Example 4 | Complex D | Pea | ⊙ | ○ | ○ |
| Example 5 (Reference) | Complex E | Albumen | ⊙ | ○ | ○ |
| Example 6 | Complex F | Soybean | ⊙ | ○ | ○ |
| Comparative Example 3 | Composition A | Soybean | × | × | Δ |

Also for a beverage containing carbon dioxide gas, the beverages of Examples to which the complexes A to F were added were provided with high foam stability. In Application Example 1, there were not so remarkable differences regarding foam quality and flavor, but as to the carbonated beverages, carbonated soft beverages with fine foam quality and good clean flavor were obtained by adding the complexes of Examples.

### <Application Example 3: alcoholic effervescent beverage>

For the water-soluble pea polysaccharides A and B, the polysaccharide-protein complexes A to F, and the composition A, the foam stability was measured by the method described below assuming an alcoholic effervescent beverage. The results are shown in Table 4.

Into a 100 ml Nessler color comparison tube, 49 ml of a commercially available beer-like beverage produced without using malt, which is categorized as "other brewages (effervescent) (1)" was put and 1 ml of 10% aqueous solution of polysaccharide, complex or composition was added, and then they were mixed gently in a manner which avoids foaming. Using an ultrasonic foaming apparatus (Sonic Hour: manufactured by TAKARA TOMY A.R.T.S), an ultrasonic pulse was applied five times from the bottom of the color comparison tube for foaming. The thickness of the foam layer being after 2 minutes from the foaming was measured, and the criteria of foam stability are as follows: when the thickness is 60 mm or more, this is expressed by ⊙; when the thickness is 40 mm or more and less than 60 mm, this is expressed by ○; when the thickness is 20 mm or more and less than 40 mm, this is expressed by △; and when the thickness is less than 20 mm, this is expressed by ×. When the evaluation is ⊙ or ○, this is rated as acceptable. As a comparison, a sample prepared without adding anything was evaluated under the same conditions (Comparative Example 7).

Organoleptic evaluation was performed for each beverage, and the foam quality (fineness of foam) and the flavor were evaluated according to the following criteria. The foam quality was evaluated on the basis of visual observation and mouthfeel at tasting, and the flavor was evaluated by tasting.

### (Foam quality)

○: Very fine
△: Moderately fine
×: Coarse
(Flavor)
○: Very good
△: Good
×: Bad

**[Table 4]**

| Foam stability, foam quality and flavor in alcoholic effervescent beverage | | | | | |
|---|---|---|---|---|---|
| | | Type of protein | Foam stability | Foam quality | Flavor |
| Comparative Example 1 | Polysaccharide A | - | × | Δ | ○ |
| Comparative Example 2 | Polysaccharide B | - | × | × | ○ |
| Example 1 | Complex A | Soybean | ⊙ | ○ | ○ |
| Example 2 (Reference) | Complex B | Casein | ⊙ | ○ | ○ |
| Example 3 (Reference) | Complex C | Wheat | ○ | ○ | ○ |
| Example 4 | Complex D | Pea | ⊙ | ○ | ○ |
| Example 5 (Reference) | Complex E | Albumen | ⊙ | ○ | ○ |
| Example 6 | Complex F | Soybean | ⊙ | ○ | ○ |
| Comparative Example 3 | Composition A | Soybean | × | × | Δ |
| Comparative Example 7 | Not added | - | × | × | ○ |

Foam stability, foam quality, and flavor of the effervescent beverages containing alcohol of the individual Examples and Comparative Examples exhibited almost the same tendency as those of Application Example 2. Astringency peculiar to a soybean protein was felt a little in the composition A which was not heated. Meanwhile, flavor was improved in the complexes A to F which were heated.

## Claims

1. A method for producing a polysaccharide-protein complex, comprising heating a water-soluble pea polysaccharide or a water-soluble soybean polysaccharide in a presence of a pea protein or a soybean protein at a pH of 2 to 5 and a temperature of 100°C to 160°C, wherein the polysaccharide-protein complex has 30% by mass or less of a fraction having 12000 or more of molecular weight and 30% by mass or more of a fraction having 500 or more and less than 12000 of molecular weight.

2. The method according to claim 1, wherein the polysaccharide-protein complex has 25% by mass or less of a fraction having 12000 or more of molecular weight and 40% by mass or more of a fraction having 500 or more and less than 12000 of molecular weight.

3. The method according to claim 1 or 2, wherein a ratio of the polysaccharide to the protein in the polysaccharide-protein complex is from 10:1 to 1:100 on mass basis.

4. The method according to claim 1 or 2, wherein a ratio of the polysaccharide to the protein in the polysaccharide-protein complex is from 5:1 to 1:10 on mass basis.

5. The method according to any one of claims 1 to 4, wherein a pH in the heating is 2.5 to 3.5.

6. A method for stabilizing foam of an effervescent beverage, comprising:
a step of heating a water-soluble pea polysaccharide or a water-soluble soybean polysaccharide in a presence of a pea protein or a soybean protein at a pH of 2 to 5 and a temperature of 100°C to 160°C to obtain a polysaccharide-protein complex having 30% by mass or less of a fraction having 12000 or more of molecular weight and 30% by mass or more of a fraction having 500 or more and less than 12000 of molecular weight; and
a step of adding the polysaccharide-protein complex to an effervescent beverage raw material.

7. A method for producing an effervescent beverage, comprising:
a step of heating a water-soluble pea polysaccharide or a water-soluble soybean polysaccharide in a presence of a pea protein or a soybean protein at a pH of 2 to 5 and a temperature of 100°C to 160°C to obtain a polysaccharide-protein complex having 30% by mass or less of a fraction having 12000 or more of molecular weight and 30% by mass or more of a fraction having 500 or more and less than 12000 of molecular weight; and
a step of adding the polysaccharide-protein complex to an effervescent beverage raw material.

8. The method according to claim 7, wherein the effervescent beverage contains an alcohol.

9. A foam stabilizer comprising a polysaccharide-protein complex obtained by the method of any one of claims 1 to 5 as an active component, the complex comprising a pea protein or a soybean protein and a water-soluble pea polysaccharide or a water-soluble soybean polysaccharide, and having a 30% by mass or less of a fraction having 12000 or more of molecular weight and 30% by mass or more of a fraction having 500 or more and less than 12000 of molecular weight, wherein the complex is heated.

10. The foam stabilizer according to claim 9, wherein a ratio of the polysaccharide to the protein in the polysaccharide-protein complex is from 10:1 to 1:100 on mass basis.

11. An effervescent beverage comprising the foam stabilizer according to claim 9 or 10.

12. The effervescent beverage according to claim 11, comprising an alcohol.

## Patentansprüche

1. Verfahren zum Herstellen eines Polysaccharid-Protein-Komplexes, umfassend ein Erhitzen eines wasserlöslichen Erbsenpolysaccharids oder eines wasserlöslichen Sojabohnenpolysaccharids in einer Gegenwart eines Erbsenproteins oder eines Sojabohnenproteins bei einem pH-Wert von 2 bis 5 und einer Temperatur von 100 °C bis 160 °C, wobei der Polysaccharid-Protein-Komplex zu 30 Massen-% oder weniger eine Fraktion, die ein Molekulargewicht von 12000 oder mehr aufweist, und zu 30 Massen-% oder mehr eine Fraktion aufweist, die ein Molekulargewicht von 500 oder mehr und weniger als 12000 aufweist.

2. Verfahren nach Anspruch 1, wobei der Polysaccharid-Protein-Komplex zu 25 Massen-% oder weniger eine Fraktion, die ein Molekulargewicht von 12000 oder mehr aufweist, und zu 40 Massen-% oder mehr eine Fraktion aufweist, die ein Molekulargewicht von 500 oder mehr und weniger als 12000 aufweist.

3. Verfahren nach Anspruch 1 oder 2, wobei ein Verhältnis des Polysaccharids zu dem Protein in dem Polysaccharid-Protein-Komplex auf Massenbasis von 10 : 1 bis 1 : 100 beträgt.

4. Verfahren nach Anspruch 1 oder 2, wobei ein Verhältnis des Polysaccharids zu dem Protein in dem Polysaccharid-Protein-Komplex auf Massenbasis von 5 : 1 bis 1 : 10 beträgt.

5. Verfahren nach einem der Ansprüche 1 bis 4, wobei ein pH-Wert bei dem Erhitzen 2,5 bis 3,5 beträgt.

6. Verfahren zum Stabilisieren von Schaum eines schäumenden Getränks, umfassend:
einen Schritt des Erhitzens eines wasserlöslichen Erbsenpolysaccharids oder eines wasserlöslichen Sojabohnenpolysaccharids in einer Gegenwart eines Erbsenproteins oder eines Sojabohnenproteins bei einem pH-Wert von 2 bis 5 und einer Temperatur von 100 °C bis 160 °C, um einen Polysaccharid-Protein-Komplex zu erhalten, der zu 30 Massen-% oder weniger eine Fraktion, die ein Molekulargewicht von 12000 oder mehr aufweist, und zu 30 Massen-% oder mehr eine Fraktion aufweist, die ein Molekulargewicht von 500 oder mehr und weniger als 12000 aufweist; und
einen Schritt eines Zugebens des Polysaccharid-Protein-Komplexes zu einem Rohmaterial für ein schäumendes Getränk.

7. Verfahren zum Herstellen eines schäumenden Getränks, umfassend:
einen Schritt des Erhitzens eines wasserlöslichen Erbsenpolysaccharids oder eines wasserlöslichen Sojabohnenpolysaccharids in einer Gegenwart eines Erbsenproteins oder eines Sojabohnenproteins bei einem pH-Wert von 2 bis 5 und einer Temperatur von 100 °C bis 160 °C, um einen Polysaccharid-Protein-Komplex zu erhalten, der zu 30 Massen-% oder weniger eine Fraktion, die ein Molekulargewicht von 12000 oder mehr aufweist, und zu 30 Massen-% oder mehr eine Fraktion aufweist, die ein Molekulargewicht von 500 oder mehr und weniger als 12000 aufweist; und
einen Schritt des Zugebens des Polysaccharid-Protein-Komplexes zu einem Rohmaterial für ein schäumendes Getränk.

8. Verfahren nach Anspruch 7, wobei das schäumende Getränk einen Alkohol enthält.

9. Schaumstabilisator, umfassend als aktive Komponente einen Polysaccharid-Protein-Komplex, der durch das Verfahren nach einem der Ansprüche 1 bis 5 erhalten wird, der Komplex umfassend ein Erbsenprotein oder ein Sojabohnenprotein und ein wasserlösliches Erbsenpolysaccharid oder ein wasserlösliches Sojabohnenpolysaccharid, und wobei er zu 30 Massen-% oder weniger eine Fraktion, die ein Molekulargewicht von 12000 oder mehr aufweist, und zu 30 Massen-% oder mehr eine Fraktion aufweist, die ein Molekulargewicht von 500 oder mehr und weniger als 12000 aufweist, wobei der Komplex erhitzt wird.

10. Schaumstabilisator nach Anspruch 9, wobei ein Verhältnis des Polysaccharids zu dem Protein in dem Polysaccharid-Protein-Komplex auf Massenbasis von 10 : 1 bis 1 : 100 beträgt.

11. Schäumendes Getränk, umfassend den Schaumstabilisator nach Anspruch 9 oder 10.

12. Schäumendes Getränk nach Anspruch 11, umfassend einen Alkohol.

## Revendications

1. Procédé de production d'un complexe polysaccharide-protéine, comprenant le chauffage d'un polysaccharide de pois hydrosoluble ou d'un polysaccharide de soja hydrosoluble en présence d'une protéine de pois ou d'une protéine de soja à un pH de 2 à 5 et à une température de 100 °C à 160 °C, dans lequel le complexe polysaccharide-protéine présente 30 % en masse ou moins d'une fraction ayant un poids moléculaire de 12 000 ou plus et 30 % en masse ou plus d'une fraction ayant un poids moléculaire de 500 ou plus et inférieur à 12 000.

2. Procédé selon la revendication 1, dans lequel le complexe polysaccharide-protéine présente 25 % en masse ou moins d'une fraction ayant un poids moléculaire de 12 000 ou plus et 40 % en masse ou plus d'une fraction ayant un poids moléculaire de 500 ou plus et inférieur à 12 000.

3. Procédé selon la revendication 1 ou 2, dans lequel un rapport du polysaccharide à la protéine dans le complexe polysaccharide-protéine est de 10:1 à 1:100 sur une base de masse.

4. Procédé selon la revendication 1 ou 2, dans lequel un rapport du polysaccharide à la protéine dans le complexe polysaccharide-protéine est de 5:1 à 1:10 sur une base de masse.

5. Procédé selon l'une quelconque des revendications 1 à 4, dans lequel le pH, lors du chauffage, est de 2,5 à 3,5.

6. Procédé de stabilisation de mousse d'une boisson effervescente, comprenant :
une étape de chauffage d'un polysaccharide de pois hydrosoluble ou d'un polysaccharide de soja hydrosoluble en présence d'une protéine de pois ou d'une protéine de soja à un pH de 2 à 5 et à une température de 100 °C à 160 °C pour obtenir un complexe polysaccharide-protéine ayant 30 % en masse ou moins d'une fraction ayant un poids moléculaire de 12 000 ou plus et 30 % en masse ou plus d'une fraction ayant un poids moléculaire de 500 ou plus et inférieur à 12 000 ; et
une étape d'ajout du complexe polysaccharide-protéine à une matière première de boisson effervescente.

7. Procédé de production d'une boisson effervescente, comprenant :
une étape de chauffage d'un polysaccharide de pois hydrosoluble ou d'un polysaccharide de soja hydrosoluble en présence d'une protéine de pois ou d'une protéine de soja à un pH de 2 à 5 et à une température de 100 °C à 160 °C pour obtenir un complexe polysaccharide-protéine ayant 30 % en masse ou moins d'une fraction ayant un poids moléculaire de 12 000 ou plus et 30 % en masse ou plus d'une fraction ayant un poids moléculaire de 500 ou plus et inférieur à 12 000 ; et
une étape d'ajout du complexe polysaccharide-protéine à une matière première de boisson effervescente.

8. Procédé selon la revendication 7, dans lequel la boisson effervescente contient un alcool.

9. Stabilisateur de mousse comprenant un complexe polysaccharide-protéine obtenu par le procédé selon l'une quelconque des revendications 1 à 5 en tant que composant actif, le complexe comprenant une protéine de pois ou une protéine de soja et un polysaccharide de pois hydrosoluble ou un polysaccharide de soja hydrosoluble, et ayant 30 % en masse ou moins d'une fraction ayant un poids moléculaire de 12 000 ou plus et 30 % en masse ou plus d'une fraction ayant un poids moléculaire de 500 ou plus et inférieur à 12 000, dans lequel le complexe est chauffé.

10. Stabilisateur de mousse selon la revendication 9, dans lequel un rapport du polysaccharide à la protéine dans le complexe polysaccharide-protéine est de 10:1 à 1:100 sur une base de masse.

11. Boisson effervescente comprenant le stabilisateur de mousse selon la revendication 9 ou 10.

12. Boisson effervescente selon la revendication 11, comprenant un alcool.
